(19) Europäisches Patentamt / European Patent Office / Office européen des brevets

(11) **EP 4 186 590 A1**

(12) **EUROPEAN PATENT APPLICATION**

(43) Date of publication:
**31.05.2023   Bulletin 2023/22**

(21) Application number: **21211369.0**

(22) Date of filing: **30.11.2021**

(51) International Patent Classification (IPC):
**B01J 13/04** $^{(2006.01)}$

(52) Cooperative Patent Classification (CPC):
**B01J 13/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Friedrich-Alexander-Universität Erlangen-Nürnberg**
**91054 Erlangen (DE)**

(72) Inventors:
• **REY, Marcel**
  **91068 Münchaurach (DE)**
• **VOGEL, Nicolas**
  **91052 Erlangen (DE)**
• **NAIR, Sharanya**
  **91058 Erlangen (DE)**

(74) Representative: **Aera A/S**
**Niels Hemmingsens Gade 10, 5th Floor**
**1153 Copenhagen K (DK)**

(54)    **PARTICLE DISPERSION AND PROCESS FOR FORMING A PARTICLE DISPERSION**

(57)     The present invention relates to a process for producing a particle dispersion comprising the steps of: a) providing a dispersion consisting of a solvent and solid core particles, b) providing a solution of a soluble, interfacially-active polymer having a molecular weight of more than 5 kDa, c) mixing said dispersion of solid core particles with said polymer solution, d) removing free polymer from the obtained mixture; wherein in step a) the solvent is selected from an organic solvent, a mixture of at least two organic solvents or a mixture of at least one organic solvent with water; wherein in step c), the amount of the soluble, interfacially-active polymer mixed with said dispersion of solid core particles exceeds the amount of polymer required to coat the surface of each of the solid core particles with a monolayer of the polymer; wherein step d) is repeated until the requirement described by the following formula is fulfilled:

$$(ST_{disp} - 18\ mN/m)/\ (ST_{solv} - 18\ mN/m) > 0.90,$$

with $ST_{disp}$ being the surface tension of the modified particle dispersion in [mN/m] and $ST_{solv}$ being the surface tension of the pure solvent or solvent mixture in [mN/m]; and wherein the solvent or solvent mixture contained in the dispersion of solid core particles is miscible with the solvent or solvent mixture contained in the polymer solution. The present invention also relates to a particle dispersion exhibiting a homogenous drying pattern as well as a film made thereof and the use of the non-aqueous particle dispersion.

Fig. 1

Processed by Luminess, 75001 PARIS (FR)

## Description

The present invention relates to a particle dispersion exhibiting a homogenous drying pattern and a process for forming said particle dispersion. Furthermore, the invention relates to a homogenous particle film comprising modified particles and a process for forming a homogenous particle film from droplets of said particle dispersion. Finally, the invention also relates to the use of said particle dispersion for suppressing the coffee ring effect during the drying process of droplets of said particle dispersion.

*Background*

After spilling coffee, one will observe the characteristic circular stains left by the drying droplets. This universal phenomenon, known as the "coffee ring effect", is observed for a variety of suspended materials. It can be explained by the pinning of the drying suspension droplet to the substrate, followed by the preferential evaporation of water around the drop edge. This liquid is replenished from the center of the droplet, inducing a capillary flow towards the drying edge. The suspended material is thus carried towards the drop edge forming the characteristic ring pattern (Deegan, R. D. et al.; Nature, 389, 827-829 (1997)). The importance of achieving uniform drying patterns has led to different strategies to suppress the coffee ring effect. The capillary flow can be reduced by an increase in viscosity due to the addition of soluble polymers (Seo, C. et al.; Sci. Rep. 7, 1-9 (2017)) or by invoking Maragoni flows (Hu, H. et al.; J. Phys. Chem. B, 110, 7090-7094 (2006)) to at least partially counteract the capillary flow. The homogeneity of the deposit could also be improved by using solvent mixtures (Parsa, Maryam, et al. Journal of Nanoparticle Research, 19, 1-26 (2017); Hu, Guohua, et al. Science advances 6.33 (2020)). Tuning the particle-particle and particle-interface interactions can cause aggregation and therefore enhanced sedimentation of the dispersed material, or electrostatic adsorption to the substrate (Anyfantakis, M. et al.; Langmuir 31, 4113-4120 (2015)). Finally, the shape of the particles itself has been shown to affect the coffee ring formation, with ellipsoidal particles causing a uniform drying behaviour (Yunker, P. J. et al.; Nature 476, 308-311 (2011)). Common to all these approaches is the necessity to precisely tailor the system, requiring customized substrates, surfactants, or particles.

The described coffee ring effect causes problems for a number of technological applications, such as coating techniques or inkjet printing (Park, J. et al.; Langmuir 22, 3506-3513 (2006)), where a uniform deposition is desired. Thus, the object of the present invention is to provide a versatile strategy to overcome the coffee ring effect for particle dispersions comprising at least one organic solvent. In particular, it is an object of the present invention to provide materials and processes suitable to overcome the coffee ring effect.

*Summary of the Invention*

The present invention is based on the finding that the above-mentioned objectives can be achieved by a particle dispersion exhibiting a homogenous drying pattern comprising from 0.0001 to 5.0 wt.% of modified particles and a solvent,

wherein the modified particles comprise, or consist of, a solid core particle and a polymeric shell, wherein the polymeric shell comprises, or consists of, a monolayer of a soluble interfacially-active polymer having a molecular weight of more than 5 kDa, which is adsorbed to the solid core particle;

wherein the solvent has a boiling point in a range of from 60 to 250°C, preferably from 80 to 200°C, more preferably from 100 to 180°C and a surface tension in a range of from 23 to 60 mN/m, preferably from 23 to 50 mN/m, more preferably from 25 to 40 mN/m, most preferably from 25 to 35 mN/m;

wherein the requirement set out by the following formula is fulfilled:

$$(ST_{disp} - 18\ mN/m)/\ (ST_{solv} - 18\ mN/m) > 0.90,$$

with $ST_{disp}$ being the surface tension of the modified particle dispersion in [mN/m] and $ST_{solv}$ being the surface tension of the pure solvent or solvent mixture in [mN/m]; and

wherein the solvent is selected from an organic solvent, a mixture of at least two organic solvents or a mixture of at least one organic solvent with water.

Functionalizing the surface of suspended particles with interfacially-active polymers gives rise to particle dispersions, which show a homogenous drying pattern and, thus, overcome the coffee ring effect.

Another aspect of the invention is the provision of a process for producing a particle dispersion comprising the steps of:

a) providing a dispersion consisting of a solvent and solid core particles,

b) providing a solution of a soluble, interfacially-active polymer having a molecular weight of more than 5 kDa,

c) mixing said dispersion of solid core particles with said polymer solution,

d) removing free polymer from the obtained mixture;

wherein in step a) the solvent is selected from an organic solvent, a mixture of at least two organic solvents or a mixture of at least one organic solvent with water;

wherein in step c), the amount of the soluble, interfacially-active polymer mixed with said dispersion of solid core particles exceeds the amount of polymer required to coat the surface of each of the solid core particles with a monolayer of the polymer;

wherein step d) is repeated until the requirement described by the following formula is fulfilled:

$$(ST_{disp} - 18 \text{ mN/m})/ (ST_{solv} - 18 \text{ mN/m}) > 0.90,$$

with $ST_{disp}$ being the surface tension of the modified particle dispersion in [mN/m] and $ST_{solv}$ being the surface tension of the pure solvent or solvent mixture in [mN/m]; and

wherein the solvent or solvent mixture contained in the dispersion of solid core particles is miscible with the solvent or solvent mixture contained in the polymer solution.

In a further aspect, the invention relates to a homogenous particle film comprising, or consisting of, modified particles comprising a solid core particle and an outer polymer shell, wherein the polymer shell comprises, or consists of, a soluble, interfacially-active polymer having a molecular weight of at least 5 kDa, wherein the average coverage of the substrate surface with particles is essentially uniform over the entire particle film.

In yet another aspect, the invention is directed to a process for forming a homogenous particle film from droplets of a particle dispersion according to any one of claims 4 to 11, the process comprising:

-    providing a particle dispersion,

-    forming droplets of the particle dispersion,

-    contacting the droplets with a surface,

-    allowing the droplets to dry on said surface;

wherein the concentration of modified particles in the dispersion is from 0.0001 to 5 wt.%, preferably from 0.0005 to 2.5 wt.%, more preferably from 0.001 to 1.0 wt.% based on the total weight of the particle dispersion.

Moreover, in a final aspect, the invention relates to the use of a particle dispersion according to anyone of claims 4 to 11 for suppressing the coffee ring effect, that is, convective transport of particles to the edge, during the drying process of droplets of said particle dispersion.

*Brief description of the Figures*

Figure 1 is a schematic illustration of the process for producing a particle dispersion.

Figure 2 depicts optical microscopy images of dried dispersions of hematite particles in butanol according to the invention (top), as well as cross-sectional grey value distribution in the obtained particle films/ butanol dispersions after drying (bottom).

Figure 3 depicts optical microscopy images of dried dispersions comprising unfunctionalized hematite particles (top) and dried dispersions comprising modified hematite particles (bottom).

Figure 4 depicts optical microscopy images of dried dispersions of poly(methyl methacrylate) particles in decalin.

Figure 5 depicts optical microscopy images of dried dispersions of hematite particles in ethanol-water dispersions.

*Detailed description of the Invention*

In the following, the individual components and process steps are defined in more detail. Furthermore, the following terms and expressions are used throughout the description according to the definitions provided below, unless otherwise indicated.

Definitions

As already pointed out above, the *"coffee ring effect"* is the convective transport of particles to the droplet edge during the drying process of droplets of a particle dispersion.
The term *"solvent"* as used herein relates to at least one organic solvent, mixtures of at least two organic solvents, as well as to mixtures of at least one organic solvent and water.
The expression *"pure solvent"* as used herein relates to a solvent or solvent mixture, which does not comprise any solid particles, dissolved polymer or any other additive that does not fall under the above definition of a solvent.
The *"molecular weight"* of polymers indicates the weight average molecular weight of a polymer as determined by gel permeation chromatography (GPC).
In the context of particles, the expression *"particle size"* refers to the average particle diameter as determined by dynamic light scattering.
The expression *"surface tension of dispersions and/ or solutions"* relates to numerical values in mN/m of the surface tension as determined using the Wilhelmy method at a temperature of 25 °C.
The term *"adsorbed"* indicates that a polymer (or any other chemical substance) is linked to a particle and/ or surface via any type of physical and/ or chemical interaction. Such interactions include, for example, Van-der-Waals forces, hydrogen bonding, hydrophobic interactions, or covalent or ionic chemical bonds.
In the context of the current application, the expression *"substantially free of"* indicates that the component in question is only contained in unavoidable trace amounts. Unavoidable trace amounts may occur, for example, where equilibrium states are concerned.
The expression *"homogenous film"* relates to a film, wherein the average coverage of the surface of a substrate is essentially uniform over the entire film. Uniformity of the average surface coverage is determined via grey scale measurements on photographs of the dried droplets. The grey scale distribution was obtained by plotting the grey values of a cross-sectional line across the droplet using the software imageJ.
The term *"soluble polymers"* describes polymeric substances that dissolve, disperse, or swell in the respective solvent.
The term *"interfacially-active"* describes the ability of a substance to adsorb or / and interact with solid and liquid interfaces and modify their physical properties.
The term *"interfacially-active soluble polymer"* describes a polymer that is soluble in the respective solvent and reduces the surface tension of said solvent when dissolved therein. This decrease in surface tension can be measured with the Wilhelmy method.
The particle dispersion of the invention comprises modified particles, wherein the modified particles comprise a solid core particle and a polymeric shell. More specifically, said particle dispersion is a dispersion comprising solid core particles, modified by adsorbing on the surface thereof a monolayer of an interfacially-active polymer, and a solvent or solvent mixture, wherein said modified solid particles are dispersible.

Solvent

Since it is an object of the present invention to provide a universal strategy for avoiding the coffee stain effect, there are no specific limitations as regards the solvent to be used. Specifically, organic solvents including polar and apolar organic solvents, as well as miscible mixtures thereof, optionally further comprising water, can be used.

However, it has been found that the solvent, or solvent mixture, has a boiling point in a range of from 60 to 250°C, preferably from 80 to 200°C, more preferably from 100 to 180°C and a surface tension in a range of from 23 to 60 mN/m, preferably from 23 to 50 mN/m, more preferably from 25 to 40 mN/m, most preferably from 25 to 35 mN/m.

If the boiling point of the solvent is less than 60°C, the solvent evaporates too quickly at ambient temperature. On the other hand, if the boiling point is above 250°C, special drying conditions would be required (elevated temperature and/ or reduced pressure) since the evaporation timescale is too long to observe meaningful drying at room temperature.

If the surface tension is outside of the above range, droplet formation is negatively affected.

Examples of suitable solvents include polar and apolar organic solvents.

Polar solvents include, for example, alcohols, esters, ethers, ketones, amides and any miscible mixture thereof.

Preferred polar solvents comprise alcohols, ketones, ethers and amides.

More preferred polar solvents are alcohols having between 3 and 8 carbon atoms, acetone, tetrahydrofuran (THF), dimethyl formamide (DMF) and dimethyl sulfoxide (DMSO).

Apolar organic solvents include, for example, unsubstituted hydrocarbons, halogenated hydrocarbons and any miscible mixture thereof.

Preferred apolar solvents comprise unsubstituted hydrocarbons having between 6 and 12 carbon atoms.

More preferred apolar solvents are hexane, benzene, toluene and decalin.

Solvent mixtures may optionally further comprise water, given that the overall solvent mixture is miscible. If water is comprised in the solvent mixture, it is preferably present in an amount of less than 50 wt.%, more preferably less than 75 wt.%, even more preferably less than 90 wt.% based on the total mass of the solvent mixture.

Solid core particle

Since it is an object of the present invention to provide a universal strategy for avoiding the coffee stain effect, there are no specific limitations as regards the materials from which said solid core particles are made. However, it is a general requirement of the invention that the solid core particles do not dissolve in the respective solvent. Moreover, it is another requirement that the solid core particles can be dispersed in the respective solvent.

Possible materials for the solid core particle are organic materials, carbonaceous materials, and inorganic materials.

Specific examples of organic materials include thermoplastic polymer particles, such as (meth)acrylic polymers, polyolefins, polystyrene, polyvinyl chloride, polyvinylidene fluoride, polycarbonate, polytetrafluoroethylene and duroplastic polymer particles, such as polyesters, polyurethanes, polyimides, epoxy resins, melamine resins. Polymer particles may, optionally, be crosslinked in order to enhance their stability in the solvent. Alternatively, the material of the polymer particle is selected such that it is insoluble in the solvent to avoid dissolution.

Moreover, suitable organic materials may include organic pigments.

Specific examples of carbonaceous materials include carbon black, graphite, carbon nanotubes and graphene.

Specific examples of inorganic materials include metals, semimetals, metal alloys, intermetallic components, metal oxides, semimetal oxides, transition metal oxides, non-metal oxides, mixed metal oxides, mixed semi metal oxides, metal sulphides, metal halides, metal oxide hydrates, metal phosphates, semimetal phosphate, metal chalcogenides, semimetal chalcogenides, metal nitrides, semimetal nitrides, silicates, aluminosilicates, metal carbides, perovskites, metal carbonates, zeolites, metal organic frameworks, particles formed from two dimensional, sheet-like structures, mica, glass, ceramic materials, calcium carbonate, hydroxyapatite, bioglass, bioactive glasses, bioactive ceramics and mixtures thereof.

More preferably, the material for the solid core particle is selected from polymer particles -which may optionally be crosslinked, carbon black particles, iron oxide particles, silica particles, titania particles; even more preferably, selected from silica, hematite, goethite and titanium dioxide.

Shape and size of the solid core particles are not particularly limited. However, upon selecting the size of the solid core particles, it is important to keep the intended use of the particle dispersions in mind and to select the particle size accordingly. If the particles become exceedingly large and, thus, too heavy, sedimentation will prevent the formation of a stable dispersion of particles in the solvent phase and affect the drying behaviour. Therefore, the solid core particles may have a size of 100 μm or less, preferably of 10 μm or less, more preferably 1.5 μm or less. In case of solid core particles having a particle size of 100 μm or more, physical effects during drying are outweighed by the large mass of the particles. According to a preferred embodiment, the particle size of the solid core particles is at least 5 nm, preferably at least 20 nm, more preferably at least 50 nm, and even more preferably at least 100 nm.

The particle shape is of no importance for achieving the effect.

Polymeric shell

Generally, the polymeric shell comprises, or consists of, a monolayer of an interfacially-active polymer having a molecular weight of more than 5 kDa, which is adsorbed to the solid core particle and which is soluble in the respective solvent. Alternatively, the polymer can also be attached to the core particle via chemical bonding.

Upon selecting the interfacially-active polymer, care must be taken to ensure that the polymer can interact with the particle surface and the liquid/air interface. The interfacial activity of a polymer is shown by a reduction in the surface tension of a solvent upon addition of free polymer. This can be measured, for example by the Wilhelmy plate method.

The interaction between polymer and particle surface is possible if the free energy of adsorption is negative, i.e. that the system gains energy from the interaction of polymer and particle. Such interactions can be measured, for example, by isothermal titration calorimetry.

Specific examples of suitable soluble interfacially-active polymers include polyvinylpyrrolidone, polyvinyl alcohol 87% hydrolyzed, poly(N-isopropylacrylamide), methyl cellulose and poly(dimethylsiloxane). Preferably, the polymer is selected form polyvinylpyrrolidone, polyvinyl alcohol 87% hydrolyzed and poly(N-isopropylacrylamide). More preferably, the polymer is selected from polyvinylpyrrolidone and polyvinyl alcohol 87% hydrolyzed.

If the molecular weight of the polymer is less than 5 kDa, the resulting polymeric shell is not suitable to overcome the coffee ring effect. Preferably, the molecular weight of the soluble interfacially-active polymer is at least 10 kDa, more preferably at least 55 kDa, still more preferably at least 130 kDa and most preferably at least 360 kDa.

Particle dispersion

Suitable combinations for forming particle dispersions in accordance with the present invention and comprising solid core particles, interfacially-active polymer and a solvent, should meet the following requirements:

- the interfacially-active polymer can interact with the particle surface and the liquid/air interface;

- the interfacially-active polymer is soluble in the solvent in which the solid core particles are dispersed;

- the particle system is - prior to adsorption of the interfacially-active polymer - not sterically stabilized with long polymer chains;

- the polymer is capable to adsorb onto the particles, which can be measured by isothermal titration calorimetry, by an increase in hydrodynamic diameter measured by DLS (dynamic light scattering) or by a change in density and sedimentation coefficient by AC (analytical centrifugation);

- the dispersion is substantially free of unbound polymer.

In order to ensure that the interfacially-active polymer is soluble in the solvent in which the solid core particles are dispersed, a proper choice of core particles and polymers is key. In this regard, a suitable strategy involves verifying that the Hansen solubility parameters of solvent and polymer are similar. Similar in this respect means that the relative energy difference (RED) between the Hansen parameters of the polymer and the solvent originating from disperse interactions ($\delta_D$), polar interactions ($\delta_P$), and hydrogen-bonding interactions ($\delta_H$) is smaller than 1.2, preferably smaller than 1.1, even more preferably smaller than 1.0 and most preferably smaller than 0.95. The RED can be calculated from the Hansen Solubility Parameter difference between the polymer and the solvent, $R_a$, which is defined by the distance in the three-dimensional Hansen Space, and the radius of a sphere containing all good solvents of the polymer ($R_0$), as: RED= $R_a/R_0$, as described in Hansen, C: Hansen Solubility Parameters: A User's Handbook, Second Edition, Taylor and Francis, Inc, ISBN: 978-0849372483.

A particle dispersion according to the present invention and exhibiting a homogenous drying pattern comprises, or consists of, from 0.0001 to 5.0 wt.% of modified particles comprising a solid core particle, a polymeric shell (as described above in detail) and a solvent,
wherein the requirement described by the following formula is fulfilled:

$$(ST_{disp} - 18 \text{ mN/m})/ (ST_{solv} - 18 \text{ mN/m}) > 0.90,$$

with $ST_{disp}$ being the surface tension of the modified particle dispersion in [mN/m] and $ST_{solv}$ being the surface tension of the pure solvent or solvent mixture in [mN/m]; and the solvent is selected from an organic solvent, a mixture of at least two organic solvents or a mixture of at least one organic solvent with water.

If the concentration of the modified particles is below 0.0001 wt.%, no homogenous film can be obtained since the particle density in a droplet of the particle dispersion is so low that insufficient particles are available to fully and homogenously coat the area of the droplet. On the other hand, if the concentration of the modified particles exceeds 5.0 wt.%, a homogenous film cannot be obtained because the particle density in a droplet of the particle dispersion is so high that the particles start to - partially - form multiple layers of particles on top of one another during drying. Preferably, the modified particles are present in an amount of from 0.0005 to 2.5 wt.%, more preferably from 0.001 to 1.0 wt.% and most preferably from 0.01 to 0.5 wt.% based on the total weight of the particle dispersion.

The particle dispersion of the current invention meets the requirement described by the following formula:

$$(ST_{disp} - 18 \text{ mN/m})/ (ST_{solv} - 18 \text{ mN/m}) > 0.90,$$

with $ST_{disp}$ being the surface tension of the modified particle dispersion in [mN/m] and $ST_{solv}$ being the surface tension of the pure solvent or solvent mixture in [mN/m]. Preferably, the requirement of $(ST_{disp} - 18 \text{ mN/m})/ (ST_{solv} - 18 \text{ mN/m}) > 0.93$, more preferably of $(ST_{disp} - 18 \text{ mN/m})/ (ST_{solv} - 18 \text{ mN/m}) > 0.95$, is fulfilled.

A ratio $(ST_{disp} - 18 \text{ mN/m})/ (ST_{solv} - 18 \text{ mN/m})$ of less than 0.90 indicates the presence of significant amounts of dissolved interfacially-active polymers/ additives in the particle dispersion, which is not in accordance with the present invention. However, if the ratio $(ST_{disp} - 18 \text{ mN/m})/ (ST_{solv} - 18 \text{ mN/m})$ is greater than 0.90 than, the dispersion only contains a limited amount of soluble interfacially-active polymer. In other words, if the ratio $(ST_{disp} - 18 \text{ mN/m})/ (ST_{solv} - 18 \text{ mN/m})$ is greater than 0.90, the dispersion is substantially free of any soluble polymer that is not adsorbed to the solid core particle.

Here, the expression *"substantially free"* indicates that the dispersion does not contain any significant amount of soluble polymer other than the soluble interfacially-active polymer constituting the polymeric shell of the modified particles. Nevertheless, especially in case of physical adsorption, unavoidable small amounts of said soluble interfacially-active polymer constituting the polymeric shell may be present due to the equilibrium state.

Conventional particle dispersions tend to include additives, such as dispersing agents and/ or surfactants. Dispersing agents, which help to increase dispersion stability in (non-aqueous) particle dispersions, interact simultaneously with the particles and the surrounding solvent. Surfactants are usually added to particle dispersions and/ or solutions in order to adapt, more particularly reduce, the surface tension thereof. This is especially important in inkjet printing applications. Both dispersing agents and surfactants are commercially available in vast varieties and may comprise polymeric substances. Some dispersing agents act as surfactants and vice-versa. Contrary to conventional particle dispersions, the particle dispersions in accordance with the current invention do not comprise any further interfacially-active additives, such as dispersing agents and/ or (polymeric) surfactants. Preferably, the particle dispersions of the current invention do not comprise any further additives.

It has been found that the above-described particle dispersions are obtainable by a specific process, said process being described in the following.

Process for producing a particle dispersion

A process for producing a particle dispersion comprising, or consisting of, the steps of:

a) providing a dispersion consisting of a solvent and solid core particles,

b) providing a solution of a soluble, interfacially-active polymer having a molecular weight of more than 5 kDa,

c) mixing said dispersion of solid particles with said polymer solution,

d) removing free polymer from the obtained mixture;

wherein in step a) the solvent is selected from an organic solvent, a mixture of at least two organic solvents or a mixture of at least one organic solvent with water;

wherein, in step c), the amount of the soluble, interfacially-active polymer mixed with said dispersion of solid core particles exceeds the amount of polymer required to coat the surface of each of the solid core particles with a monolayer of the polymer, and

wherein step d) is repeated until the requirement described by the following formula is fulfilled:

$$(ST_{disp} - 18 \text{ mN/m})/ (ST_{solv} -18 \text{ mN/m}) > 0.90,$$

with $ST_{disp}$ being the surface tension of the modified particle dispersion in [mN/m] and $ST_{solv}$ being the surface tension of the pure solvent or solvent mixture in [mN/m]; and wherein the solvent or solvent mixture contained in the dispersion of solid core particles is miscible with the solvent or solvent mixture contained in the polymer solution.

Generally, the amount of solid core particles in the dispersion of step a) is such that the final modified particle dispersion has a modified particle concentration in a range of from 0.0001 to 5.0 wt.%, preferably from 0.0005 to 2.5 wt.%, more preferably from 0.001 to 1.0 wt.% and most preferably from 0.01 to 0.5 wt.% based on the total weight of the modified particle dispersion.

According to a preferred embodiment of the invention, in step c), the amount of the polymer added exceeds by a factor of two, preferably by a factor of 5, more preferably by a factor of 10, most preferably by a factor of 20, the amount of polymer required to coat the surface of each of the solid core particles with a monolayer of the polymer.

The amount of polymer required to coat the surface of each of the solid core particles with a monolayer of the polymer may be determined as follows:

The total surface area of the solid core particle in the dispersion is calculated from the particle diameter as measured via dynamic light scattering, the particle density as known from literature, and the particle concentration. From the particle concentration and the density, the total volume of dispersed particles can be calculated. Using the diameter measured from dynamic light scattering, the number of particles in the dispersion is obtained, which allows calculation of the total surface area. The mass of soluble interfacially-active polymers that adsorb onto certain surface area are either available from literature sources or can be determined by someone skilled in the art using the following method. A particle dispersion with a known size is mixed with a polymer solution of known concentration and molecular weight and kept under constant stirring for one day.

Then the particles, including the polymer adsorbed onto the particles, are removed by centrifugation. The change in polymer concentration in the supernatant can be determined for example by UV-Vis spectroscopy. The difference compared to the original polymer solution yields the total amount of adsorbed polymer onto the particle surface. The mass of adsorbed polymer per particle surface area can be obtained by dividing the adsorbed polymer mass by the total available surface area. The amount of the soluble interfacially-active polymer needed to cover the surface of the solid particles with a monolayer is then calculated as:

*(Total surface area of the solid core particle in the dispersion [m²]) \**

*(mass of adsorbed polymer per surface area [mg/m²]).*

Free polymer may be removed from the obtained mixture by various methods including, for example, centrifugation and dialysis, preferably centrifugation.

Solid core particles and soluble interfacially-active polymers are selected as outlined above in the context of the particle dispersion.

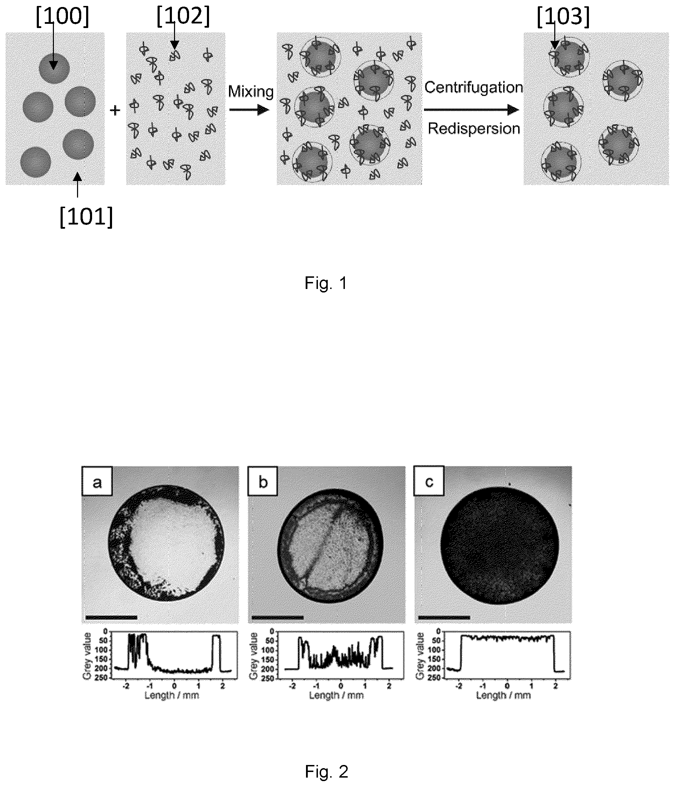

Fig. 1 provides a schematic illustration of the above described process for producing a particle dispersion. Specifically, the particle surface of a solid core particle is modified using interfacially-active polymers: a particle dispersion ([100]: particles, [101]: organic solvent) is mixed with an interfacially-active polymer solution ([102]: interfacially-active polymer). The polymer adsorbs onto the particles. Centrifugation and redispersion removes excess, non-adsorbed polymer. The modified dispersion is comprised, or consists, of a solvent and particles with an interfacially-active polymeric shell ([103]) and is preferably essentially free of any non-adsorbed polymer.

Alternatively, depending on particle and polymer polarity, the modification of solid core particles may be carried out as outlined above with the exception of the medium being an aqueous medium, followed by a solvent exchange to an organic solvent or solvent mixture, for example by drying of the particle dispersion and redispersion in an organic solvent or solvent mixture.

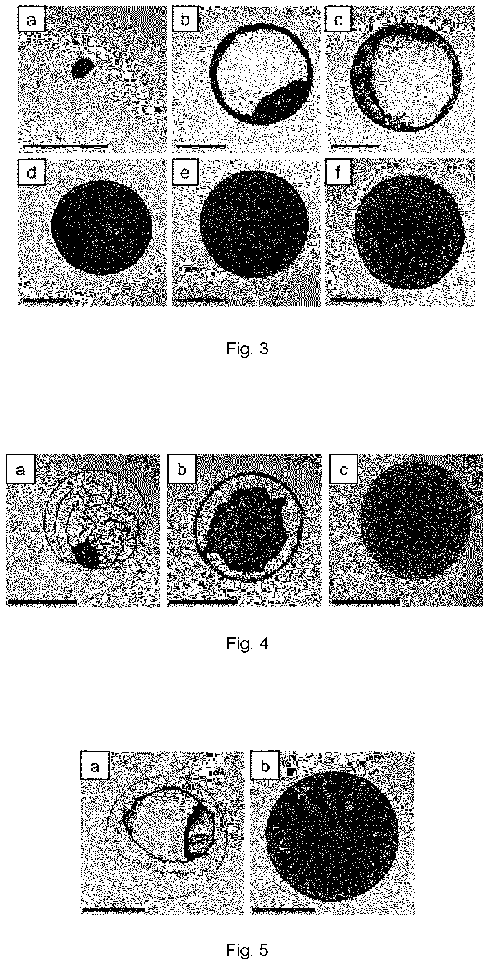

Alternatively, depending on the particle type, the modification of the core can be carried out by the copolymerization of interfacially-active macromonomers or by grafting-from or grafting-to methods. In the example of Figure 4, polydimethylsiloxane-coated PMMA particles were synthesized by a copolymerization of surface-active, monovinyl-terminated poly(dimethyl siloxane) (PDMS) macromonomers adapted from Srinivrasan, S. A., et al. Polymer 39 6-7 (1998): 1497-1501.

Process for forming homogenous particle films

In addition to the above, it has been found that homogenous particle films can be obtained from droplets of a particle dispersion according to the invention via the following process, comprising:

- providing a particle dispersion,

- forming droplets of the particle dispersion,

- contacting the droplets with a surface,

- allowing the droplets to dry on said surface;

wherein the concentration of modified particles in the dispersion is in a range of from 0.0001 to 5 wt.%, preferably from 0.0005 to 2.5 wt.%, more preferably from 0.001 to 1.0 wt.% based on the total weight of the particle dispersion.

Most preferably, the concentration of modified particles in the dispersion is from 0.01 to 0.5 wt.% based on the total weight of the particle dispersion.

The particle dispersion is a dispersion comprising solid core particles, modified by adsorbing on the surface thereof a monolayer of an interfacially-active polymer, and at least one organic solvent or a solvent mixture as defined herein above, wherein said modified solid particles are dispersible. Preferably, the particle dispersion is a modified particle dispersion as described herein.

There is an optimum in particle concentration in order to obtain a complete and homogenous particle film. Preferably, the particle concentration is chosen such that the total cross-sectional area of the particles, including the polymeric shell, is equal to the droplet surface area, which can be calculated by someone skilled in the art. The optimal particle concentration thus depends on the particle diameter, particle density, chain length of the polymeric additive, contact angle of the particle at the liquid interface, volume of the droplet and the contact angle of the droplet on the solid substrate. Depending on these different parameters, the optimum concentration to reach a homogeneous coating varies and concentration ranges as specified above can result. In the experimental part below, an exemplary calculation of the optimum concentration of particles in a dispersion is provided.

If the concentration of the modified particles is much below the optimum concentration as specified above, no homogenous film can be obtained since the particle number in a droplet of the particle dispersion is so low that an insufficient amount of particles is available to fully cover the droplet area. On the other hand, if the concentration of the modified particles is much above the optimum concentration, a homogenous film cannot be obtained because the particle density in a droplet of the particle dispersion is so high that the particles start to form multiple layers of particles on top of one another at the droplet edge during drying.

Droplets of the particle dispersion may be formed by any method and using any type of equipment. Preferred means for forming droplets include inkjet printing, drop casting, spray drying, electrospraying, spin coating, dip coating, more preferable means are inkjet printing and dropcasting.

Homogenous particle film

Homogenous particle films comprising, or consisting of, modified particles comprising a solid core particle and an outer polymer shell, wherein the polymer shell comprises, or consists of, a soluble interfacially-active polymer having a molecular weight of at least 5 kDa, preferably at least 10 kDa are characterized in that an average coverage of the substrate surface with particles is essentially uniform over the entire film.

Uniformity of the surface coverage is determined via grey scale measurements of optical microscopy images. Hereby the grey values of a line through the droplet are extracted using the software ImageJ.

Overall, it has been found that modified particle dispersions according to the current invention can be used for suppressing the coffee ring effect during the drying process of droplets of such particle dispersion. In other words, during drying of modified particle dispersions according to the invention convective transport of the modified particles to the drop edge is avoided.

*Examples*

The following examples and comparative examples prove the underlying principles and effects of the present invention. The effects of the invention are furthermore illustrated by the Figures.

Materials:

All chemicals were obtained from commercial sources and used as received if not otherwise stated.

Polyvinyl alcohol (PVA, 130 kDa, Mowiol 18-88, Sigma Aldrich),

Polyvinylpyrrolidone (PVP, 360 kD, 55 kD, 10 kD, Sigma Aldrich),

Hematite particles (Bayferrox 130, Lanxess),

Ethanol (99.9 %, Sigma Aldrich),

Butanol (99.5 %, Sigma Aldrich),

Heptanol (98 %, Sigma Aldrich),

Dodecane (99 %, Fischer Scientific),

Decahydronaphthalene (decalin, mixture of cis + trans, 99 %, Sigma Aldrich),

Methyl methacrylate (>99 %, Sigma Aldrich),

Monomethacryloxypropyl terminated poly(dimethylsiloxane) (10 kD, Fluorochem Ltd.),

Perfluorooctyltriethoxysilane (98 %, Sigma Aldrich),

Nile Red (98 %, Sigma Aldrich),

Octyl mercaptan (>98.5 %, Sigma Aldrich),

Azo-iso-butyronitrile (>97 %, VWR).

Double-filtered and deionized water (18.2 M$\Omega$·cm, double reverse osmosis by Purelab Flex 2, ELGA Veolia) was used throughout this study.

Selection of polymer/ solvent combinations

In order to ensure that the interfacially-active polymer used to modify the core particles is suitable for the purpose of the invention, the RED (Relative Energy Difference) according to the Hansen Solubility Parameter (HSP) concept was used. Details on the concept can be found in Hansen, C: Hansen Solubility Parameters: A User's Handbook, Second Edition, Taylor and Francis, Inc, ISBN: 978-0849372483.

Specifically, the interfacially-active polymer is considered soluble, and thus, suitable for carrying out the invention in a solvent, if

$$RED_{polymer/solvent} \leq 1.$$

RED is defined as

$$RED = R_a / R_0,$$

with $R_a$ being the distance between two molecular species in the HSP space (henceforth called HSP distance) and Ro being the radius of the Hansen sphere containing all good solvents. Numerical values for Hansen solubility parameters in [MPa$^{1/2}$] are given in tables 2 and 3 below.

The HSP distance Ra is calculated according to the following formula:

$$Ra^2 = 4(\delta_{D1}-\delta_{D2})^2 + (\delta_{P1}-\delta_{P2})^2 + (\delta_{H1}-\delta_{H2})^2,$$

where $\delta_D$ represents the disperse interactions, $\delta_P$ the polar interactions, and $\delta_H$ hydrogen-bonding interactions of the polymer and the solvent respectively.

Determination of polymer molecular weight

Unless otherwise indicated, the weight average molecular weight, $M_w$, of the polymers used in the examples, may be determined by gel permeation chromatography. Generally, $M_w$ of the polymers as given herein corresponds to the specifications provided by the manufacturer.

Determination of the particle size

"Particle size" as used herein relates to the arithmetic mean particle diameter determined via dynamic light scattering (DLS). Specifically, DLS measurements were performed on a Malvern Zetasizer Nano-ZS.

Calculation of optimum particle concentration:

A suspension droplet on a solid substrate can be described by a spherical cap, where the volume $V_L$ is described by equation (1).

$$V_L = \pi/3 * r_L^3 \, (1-\cos(\theta))^2 \, (2+ \cos(\theta)) \qquad (1)$$

Where $r_L$ is the radius of the droplet and $\theta$ the contact angle between the liquid and the solid substrate. Rearranging equation (2) for $r_L$ leads to:

$$r_L = ((3 \, V_L \, / \, \pi)/((1-\cos(\theta))^2 \, (2+ \cos(\theta))))^{1/3} \qquad (2)$$

The air/solvent interface of the droplet $M_L$, excluding the solid/solvent interface, is calculated using equation (3).

$$M_L = 2\pi r_L^2 \, (1- \cos(\theta)) \qquad (3)$$

The area occupied by one particle including their polymeric corona at the air/solvent interface is described by equation (4),

$$A_P = (r_p + t_{corona})^2 \, \pi \qquad (4)$$

where $r_p$ is the radius of the particle and tcorona the extension of the polymeric corona at the air/solvent interface. The contact angle of the particle at the liquid interface was
simplified to 90°. The number of particles $(N_p)$ required to fully cover the interface is described by equation (5),

$$N_p = M_L \, / \, A_P * 0.9069 \qquad (5)$$

where $A_p$ describes the interfacial area occupied by one particle including its polymeric corona and the factor 0.9069 describes the maximum packing of spheres in a plane.
The total mass of the particles in this monolayer $m_{ptot}$ is calculated using equation (6),

$$m_{ptot} = N_p\, 4/3\, \pi r_p^3\, \rho_P \qquad\qquad (6)$$

where $\rho_P$ is the density of the dispersed particles. The concentration $c_p$ in wt-% required to obtain a monolayer on the droplet surface is described in equation (7),

$$c_p = m_{ptot} / (V_L\, \rho_L)*100 \qquad\qquad (7)$$

where $\rho_L$ is the density of the liquid.

As a particular example for hematite in butanol particle dispersion with the parameters $r_p$ = 122 nm, $\rho_P$ = 5.3 g/cm$^3$, $\theta$ = 59 °, $V_L$ = 0.85 μL, $t_{corona}$ = 120 nm, we calculate an ideal particle concentration of 0.11 wt.%. For similar parameters but a larger particle radius $r_p$ = 1645 nm, we calculate an ideal particle concentration of 5 wt.%.

Dispersion and solution characterization/ surface tension:

The surface tension of the dispersions were measured with the Wilhelmy method using a Langmuir trough (KSV Nima) equipped with a platinum Wilhelmy plate (circumference = 39.2 mm). Prior to each measurements, the Wilhelmy plate was rinsed in ethanol and subsequently burnt with a Bunsen burner (ca. 1000°C flame).

Following the above measurement routine, surface tensions of the pure solvents, polymer solutions and particle dispersions were measured.

Particle functionalization

*Particles "A" - hematite particles, unmodified*

Hematite particles (Bayferrox 130, Lanxess) were used as obtained from the commercial supplier without modification. The particles have an average particle diameter of 244 nm with the particle shape being unspecified.

Particles "A" were used as received, viz. without any additional modification and/ or purification steps, in order to prepare particle dispersions denoted as Comparative Examples 1, 3, 4 and 7 (CE1, CE3, CE4, CE7) in various solvents or solvent mixtures.

*Particles "B" - hematite particles, PVP modified*

Hematite particles (Bayferrox 130, Lanxess) were dispersed in an organic solvent at a concentration of 3.2 wt.%, mixed with a solution of a soluble interfacially-active poly(vinylpyrrolidone) (5.0 wt.%) and kept under constant stirring for at least 1 hour. The weight ratio of soluble interfacially-active polymer to solid core particles in the mixture was adjusted to 1. Typically, the mixed dispersion was diluted with a solvent and centrifuged at 5'000 rpm for 5 min. The supernatant was discarded and the particles were redispersed in a solvent. The centrifugation and redispersion was, optionally, repeated several times.

Comparative Example 2 (CE2) corresponds to a dispersion of particles "B", wherein the centrifugation and redispersion cycle was NOT repeated.

Inventive Example 1 (IE1) corresponds to a dispersion of particles "B", wherein the centrifugation and redispersion cycle was repeated until the surface tension of the dispersion met the requirement

$$(STdisp - 18\ mN/M)/ (STsolv - 18\ mN/m) > 0.90.$$

*Particles "C" - hematite particles, PVA modified*

Hematite particles (Bayferrox 130, Lanxess) were dispersed in water at a concentration of 3.2 wt.% and mixed with an aqueous solution of soluble, interfacially-active poly(vinyl alcohol) (5.0 wt.%) with the same protocol as described above and in co-pending European Patent Application No. 20191024.7. The solvent was then exchanged by the evaporation of water and the particles were redispersed in a desired solvent.

Particles "C" were used to prepare particle dispersions denoted as Inventive Examples 2-4 and 6 (IE2, IE3, IE4, IE6) in various solvents or solvent mixtures. Free polymer was removed from the aqueous particle dispersion by repeated centrifugation and redispersion cycles prior to the final solvent exchange.

*Particles "D" - PMMA particles, unmodified*

Spherical poly(methyl methacrylate) PMMA particles stabilized by poly(12-hydroxystearic acid)-graft-poly(methyl methacrylate) with an arithmetic mean diameter of (531 $\pm$ 42) nm were prepared as described by Antl, L. et al. Colloids and Surfaces 17, 67-78 (1986).

Particles "D" were cleaned by 10 centrifugation and redispersion cycles in decalin to remove educts and impurities from the particle synthesis. The polymer itself does not lower the surface tension of decalin and therefore is not an interfacially-active polymer for this system. The particle dispersion in decalin is denoted as Comparative Example 5 (CE5).

*Particles "E" - PMMA particles, PDMS modified*

Spherical PMMA particles stabilized with poly(dimethylsiloxane) (PDMS) with an arithmetic mean diameter of (534 $\pm$ 92) nm were prepared according to a procedure adapted from Srinivrasan, S. A., et al. Polymer 39 6-7 (1998): 1497-1501. 0.4 g of the initiator azo-isobutyronitrile was dissolved in 10 g of methyl methacrylate monomer. 5 g of monomethacryloxypropyl terminated poly(dimethylsiloxane) (10'000 kD) was dissolved in 50 g dodecane and placed in a three-necked, round bottomed flask containing a nitrogen inlet, stirrer and condenser. To this was added a further 23.6 g of dodecane, 10 g of methyl methacrylate, 0.21 g of the chain transfer agent octyl mercaptan and a solution consisting of 0.5 g of methacrylic acid containing 0.13 g of the dye Nile red. Under a nitrogen atmosphere this mixture was heated to 80 °C whilst being stirred at 350 rpm. After allowing time for temperature equilibrium to be reached the initiator solution was added and the reaction was allowed to proceed for 6 hours. The dispersion was cleaned via repeated centrifugation and redispersion in decalin. Surface tension of the thus obtained modified particle dispersions in decalin were measured as detailed above.

Comparative Example 6 (CE6) corresponds to a dispersion of particles "E", wherein the centrifugation and redispersion cycle was NOT repeated.

Inventive Example 5 (IE5) corresponds to a dispersion of particles "E", wherein the centrifugation and redispersion cycle was repeated until the surface tension of the dispersion met the requirement

$$(ST_{disp} - 18 \text{ mN/M})/ (ST_{solv} - 18 \text{ mN/m}) > 0.90.$$

As already pointed out above, Inventive (IE1 to IE6) and Comparative Examples (CE1 to CE7) are based on hematite and PMMA particles A to E as described herein.

Table 1 provides data regarding surface tension and boiling point of the solvents used in the Inventive and Comparative Examples.

Table 2 provides Hansen solubility parameters for the polymers and solvents used in the Inventive and Comparative Examples;

Table 3 provides numerical data as to HSP distance (Ra) and Relative Energy Distance (RED) for the systems used in the Inventive and Comparative Examples. Ra and RED were calculated as described herein above.

Further details regarding the experimental parameters for inventive and comparative examples are provided in table 4.

**Table 1**

| Organic solvent | Surface tension [mN/m] | $T_b$[°C] |
|---|---|---|
| Ethanol | 21.7 | 78.4 |
| Butanol | 24.2 | 117.7 |
| Heptanol | 26.0 | 175.0 |
| Dimethylformamide (DMF) | 36.4 | 153.0 |
| Decalin | 30.5 | 190.0 |

**Table 2**

| | Hansen parameter* in [MPa½] | | | |
|---|---|---|---|---|
| | $\delta_D$ | $\delta_P$ | $\delta_H$ | $R_0$ |
| PVP | 21,40 | 11,60 | 21,60 | 17,30 |
| PDMS | 17,00 | 2,90 | 2,60 | 5,70 |
| Ethanol | 15,80 | 8,80 | 19,40 | n/a |
| Butanol | 16,00 | 5,70 | 15,80 | n/a |
| Heptanol | 15,00 | 8,00 | 13,00 | n/a |
| Hexane | 14,90 | 0,00 | 0,00 | n/a |
| Dodecane | 16,00 | 0,00 | 0,00 | n/a |
| Decalin | 18,00 | 0,00 | 0,00 | n/a |
| DMF | 17,40 | 13,70 | 11,30 | n/a |
| * Data sources: Hansen, C: Hansen Solubility Parameters: A User's Handbook, Second Edition, Taylor and Francis, Inc, ISBN: 978-0849372483; https://www.researchgate.net/post/What_is_the_Hansen_Solubility_Parameter_for_ P2VP | | | | |

**Table 3**

| Solvent/ Polymer | Ra [MPa½] | RED [MPa½] |
|---|---|---|
| Ethanol/ PVP | 11,75 | 0,679332 |
| Butanol/ PVP | 13,60 | 0,786403 |
| Heptanol/ PVP | 15,84 | 0,915341 |
| Hexane/ PDMS | 5,73 | 1,004913 |
| Dodecane/ PDMS | 4,38 | 0,768133 |
| Decalin/ PDMS | 4,38 | 0,768133 |
| DMF/ PVP | 13,21 | 0,763575 |
| Dodecane/ PVP | 26,79 | 1,548615 |

**Table 4**

| | | Solvent | Particle type | Particle conc. [wt.%] | Surface tension [mN/m] | Drying pattern |
|---|---|---|---|---|---|---|
| IE 1 | | Butanol | B | 0.11 | 24.18 | H |
| IE 2 | | DMF | C | 0.1 | 36.35 | H |
| IE 3 | | Heptanol | C | 0.11 | 26.13 | H |
| IE 4 | | Butanol | C | 0.11 | 24.16 | H |
| IE 5 | | Decalin | E | 0.08 | 30.38 | H |
| IE 6 | | H20/ Ethanol (mass ratio 9 :1) | C | 0.14 | 50.94 | H |
| CE 1 | | Butanol | A | 0.11 | 24.17 | I |
| CE 2 | | Butanol | B | 0.11 | 23.56 | I |
| CE 3 | | DMF | A | 0.1 | 36.27 | I |
| CE 4 | | Heptanol | A | 0.11 | 26.11 | I |

(continued)

|  | Solvent | Particle type | Particle conc. [wt.%] | Surface tension [mN/m] | Drying pattern |
|---|---|---|---|---|---|
| CE 5 | Decalin | D | 0.08 | 30.43 | I |
| CE 6 | Decalin | E | 0.08 | 26.62 | I |
| CE 7 | H2O/ Ethanol (mass ratio 9 :1) | A | 0.14 | 51.23 | I |

Characterization of the drying behaviour:

To enable the formation of a clearly defined droplet, the silicon wafer (LG Siltron Inc. Korea), previously cleaned by sonication in isopropanol, ethanol and water for 5 min substrate was surface-modified using a perfluorooctyltriethoxysilane.

To characterize the drying behaviour of the particle dispersions droplets of each dispersion, having a drop volume of 0.85 mL, were deposited on the substrate.

The drying behaviour at ambient temperature (20°C) was characterized by optical microscopy (Zeiss), using a 2x objective. For the ethanol-water dispersions, the substrate was solely cleaned as described above without a silanisation step.

Samples exhibiting a homogenous drying pattern were denoted as "H", whereas samples exhibiting an inhomogeneous drying pattern were denoted as "I".

Fig. 2: Top: Optical microscopy images of dried hematite particle films according to CE 1 (a), CE 2 (b) and IE 1 (c), respectively. Scale bar: 1 mm. Bottom: Cross-sectional grey value distribution after drying. A clear increase in homogeneity is observed upon removal of non-adsorbed PVP (c). Scale bar: 1 mm.

Fig. 3: Optical microscopy images of dried particle films according to comparative (CE3 (a), CE4 (b), CE1 (c)) and inventive examples (IE2 (d), IE3 (e), IE4 (f)). Scale bar: 1 mm.

Fig. 4: Optical microscopy images of dried particle films according to comparative (CE5 (a), CE6 (b)) and inventive examples (IE5 (c)). Scale bar: 1 mm.

Fig. 5: Optical microscopy images of dried particle films according to comparative (CE7 (a)) and inventive examples (IE6 (b)). Scale bar: 1 mm.

From the data provided in table 4 above, as well as from Fig. 2 to Fig. 5, it is immediately evident that the coffee ring effect is effectively suppressed if the surface tension of particle dispersions comprising modified particles having a solid particle core and a soluble interfacially-active polymer shell is adjusted to meet the requirement set out by the following formula:

$$(ST_{disp} - 18 \text{ mN/m})/ (ST_{solv} - 18 \text{ mN/m}) > 0.90,$$

with $ST_{disp}$ being the surface tension of the modified particle dispersion in [mN/m] and $ST_{solv}$ being the surface tension of the pure solvent or solvent mixture in [mN/m].

A homogeneous drying pattern was observed for the modified particles when surface tension and boiling point of the selected solvent were within the predefined ranges.

**Claims**

1. A process for producing a particle dispersion comprising the steps of:

   a) providing a dispersion consisting of a solvent and solid core particles,
   b) providing a solution of a soluble, interfacially-active polymer having a molecular weight of more than 5 kDa,
   c) mixing said dispersion of solid core particles with said polymer solution,
   d) removing free polymer from the obtained mixture;

   wherein in step a) the solvent is selected from an organic solvent, a mixture of at least two organic solvents or a mixture of at least one organic solvent with water;
   wherein in step c), the amount of the soluble, interfacially-active polymer mixed with said dispersion of solid core particles exceeds the amount of polymer required to coat the surface of each of the solid core particles with a monolayer of the polymer;

wherein step d) is repeated until the requirement described by the following formula is fulfilled:

$$(ST_{disp} - 18 \text{ mN/m})/ (ST_{solv} - 18 \text{ mN/m}) > 0.90,$$

with $ST_{disp}$ being the surface tension of the modified particle dispersion in [mN/m] and $ST_{solv}$ being the surface tension of the pure solvent or solvent mixture in [mN/m]; and

wherein the solvent or solvent mixture contained in the dispersion of solid core particles is miscible with the solvent or solvent mixture contained in the polymer solution.

2. The process according to claim 1, wherein, in step c), the amount of the polymer added exceeds by a factor of two, preferably by a factor of 5, more preferably by a factor of 10, most preferably by a factor of 20, the amount of the polymer required to coat the surface of each of the solid core particles with a monolayer of the polymer.

3. The process according to claim 1 or 2, wherein both said dispersion and said solution comprises an organic polar solvent, preferably an organic polar solvent selected from alcohols, ketones, esters, ethers, amides, sulfoxides or mixtures thereof; wherein said organic solvent or mixture thereof has a boiling point in a range of from 60 to 250°C, preferably from 80 to 200°C, more preferably from 100 to 180°C; and wherein said pure organic solvent or mixture thereof has a surface tension in a range of from 23 to 60 mN/m, preferably from 23 to 50 mN/m, more preferably from 25 to 40 mN/m, most preferably from 25 to 35 mN/m.

4. A particle dispersion exhibiting a homogenous drying pattern comprising from 0.0001 to 5.0 wt.% of modified particles and a solvent,

wherein the modified particles comprise, or consist of, a solid core particle and a polymeric shell, wherein the polymeric shell comprises, or consists of, a monolayer of a soluble interfacially-active polymer having a molecular weight of more than 5 kDa, which is adsorbed to the solid core particle;

wherein the solvent has a boiling point in a range of from 60 to 250°C, preferably from 80 to 200°C, more preferably from 100 to 180°C and a surface tension in a range of from 23 to 60 mN/m, preferably from 23 to 50 mN/m, more preferably from 25 to 40 mN/m, most preferably from 25 to 35 mN/m;

wherein the requirement described by the following formula is fulfilled:

$$(ST_{disp} - 18 \text{ mN/m})/ (ST_{solv} - 18 \text{ mN/m}) > 0.90,$$

with $ST_{disp}$ being the surface tension of the modified particle dispersion in [mN/m] and $ST_{solv}$ being the surface tension of the pure solvent or solvent mixture in [mN/m]; and

the solvent is selected from an organic solvent, a mixture of at least two organic solvents or a mixture of at least one organic solvent with water.

5. The particle dispersion according to claim 4, wherein the modified particles are present in an amount of from 0.0005 to 2.5 wt.%, preferably from 0.001 to 1.0 wt.%, more preferably 0.01 to 0.5 wt.% based on the total weight of the particle dispersion.

6. The particle dispersion according to any one of claims 4 to 5, wherein the polymeric shell consists of a monolayer of a soluble interfacially-active polymer having a molecular weight of at least 5 kDa.

7. The particle dispersion according to any one of claims 4 to 6, wherein said soluble interfacially-active polymer has a molecular weight of more than 5 kDa, preferably more than 55 kDa, more preferably more than 130 kDa, and still more preferably more than 360 kDa.

8. The particle dispersion according to any one of claims 4 to 7, wherein said soluble interfacially-active polymer is selected from polyvinylpyrrolidone, polyvinyl alcohol 87% hydrolyzed and methyl cellulose, preferably said polymer is selected from polyvinylpyrrolidone and polyvinyl alcohol 87% hydrolyzed.

9. The particle dispersion according to any one of claims 4 to 8, wherein said solid core particle comprises at least one of silica, hematite and goethite.

10. The particle dispersion according to claim 9, wherein the soluble interfacially-active polymer is either polyvinyl alcohol 87% hydrolyzed, or polyvinylpyrrolidone.

11. The particle dispersion according to claim 10, wherein the soluble interfacially-active polymer has a molecular weight of 55 kDa or more.

12. A process for forming a homogenous particle film from droplets of a particle dispersion according to any one of claims 4 to 11, the process comprising:

    - providing a particle dispersion,
    - forming droplets of the particle dispersion,
    - contacting the droplets with a surface,
    - allowing the droplets to dry on said surface;

    wherein the concentration of modified particles in the dispersion is from 0.0001 to 5 wt.%, preferably from 0.0005 to 2.5 wt.%, more preferably from 0.001 to 1.0 wt.% based on the total weight of the particle dispersion.

13. The process according to claim 12, wherein the concentration of modified particles in the dispersion is from 0.01 to 0.5 wt.%.

14. A homogenous particle film comprising, or consisting of, modified particles comprising a solid core particle and an outer polymer shell, wherein the polymer shell comprises, or consists of, a soluble, interfacially-active polymer having a molecular weight of at least 5 kDa, wherein the average coverage of the substrate surface with particles is essentially uniform over the entire particle film.

15. Use of a particle dispersion according to anyone of claims 4 to 11 for suppressing the coffee ring effect, that is convective transport of particles to the edge, during the drying process of droplets of said particle dispersion.

EP 4 186 590 A1

Fig. 1

Fig. 2

18

Fig. 3

Fig. 4

Fig. 5

Europäisches Patentamt

European Patent Office

Office européen des brevets

**EUROPEAN SEARCH REPORT**

Application Number

**EP 21 21 1369**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM HYOUNGSOO ET AL: "Controlled Uniform Coating from the Interplay of Marangoni Flows and Surface-Adsorbed Macromolecules", PHYSICAL REVIEW LETTERS, vol. 116, no. 12, 1 March 2016 (2016-03-01), XP055916561, US ISSN: 0031-9007, DOI: 10.1103/PhysRevLett.116.124501 * pages 124501-1 - pages 124501-2 * * pages 124501-4 * * figures 4-5 * | 14 | INV. B01J13/04 |
| X | CHANGDEOK SEO ET AL: "Altering the coffee-ring effect by adding a surfactant-like viscous polymer solution", SCIENTIFIC REPORTS, vol. 7, no. 1, 29 March 2017 (2017-03-29), XP055602797, DOI: 10.1038/s41598-017-00497-x * page 7 * * figure 1 * | 14 | |
| E | EP 3 954 744 A1 (UNIV FRIEDRICH ALEXANDER ER [DE]) 16 February 2022 (2022-02-16) * claim 14 * | 14 | **TECHNICAL FIELDS SEARCHED (IPC)** B01J |

-/--

The present search report has been drawn up for all claims

| Place of search | Date of completion of the search | Examiner |
|---|---|---|
| The Hague | 29 April 2022 | Tarallo, Anthony |

EPO FORM 1503 03.82 (P04C01)

## EUROPEAN SEARCH REPORT

**Application Number**

EP 21 21 1369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PERTOFT H ET AL: "Density gradients prepared from colloidal silica particles coated by polyvinylpyrrolidone (Percoll)", ANALYTICAL BIOCHEMISTRY, ACADEMIC PRESS, AMSTERDAM, NL, vol. 88, no. 1, 15 July 1978 (1978-07-15), pages 271-282, XP024822292, ISSN: 0003-2697, DOI: 10.1016/0003-2697(78)90419-0 [retrieved on 1978-07-15] * the whole document * | 1-15 | |
| A | US 2013/307899 A1 (SAITO RYO [JP] ET AL) 21 November 2013 (2013-11-21) * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 29 April 2022 | Tarallo, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

**EP 4 186 590 A1**

## ANNEX TO THE EUROPEAN SEARCH REPORT
## ON EUROPEAN PATENT APPLICATION NO.

EP 21 21 1369

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2022

| Patent document cited in search report | | Publication date | Patent family member(s) | | Publication date |
|---|---|---|---|---|---|
| EP 3954744 | A1 | 16-02-2022 | EP | 3954744 A1 | 16-02-2022 |
| | | | WO | 2022034102 A1 | 17-02-2022 |
| US 2013307899 | A1 | 21-11-2013 | CN | 103370381 A | 23-10-2013 |
| | | | EP | 2677008 A1 | 25-12-2013 |
| | | | JP | 5666337 B2 | 12-02-2015 |
| | | | JP | 2012171988 A | 10-09-2012 |
| | | | TW | 201237123 A | 16-09-2012 |
| | | | US | 2013307899 A1 | 21-11-2013 |
| | | | WO | 2012111191 A1 | 23-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20191024

**Non-patent literature cited in the description**

- **DEEGAN, R. D. et al.** *Nature,* 1997, vol. 389, 827-829
- **SEO, C. et al.** *Sci. Rep.,* 2017, vol. 7, 1-9
- **HU, H et al.** *J. Phys. Chem. B,* 2006, vol. 110, 7090-7094
- **PARSA, MARYAM et al.** *Journal of Nanoparticle Research,* 2017, vol. 19, 1-26
- **HU, GUOHUA et al.** *Science advances,* 2020, vol. 6.33
- **ANYFANTAKIS, M et al.** *Langmuir,* 2015, vol. 31, 4113-4120
- **YUNKER, P. J. et al.** *Nature,* 2011, vol. 476, 308-311
- **PARK, J et al.** *Langmuir,* 2006, vol. 22, 3506-3513
- **HANSEN, C.** Hansen Solubility Parameters: A User's Handbook. Taylor and Francis, Inc
- **SRINIVRASAN, S. A. et al.** *Polymer,* 1998, vol. 39 (6-7), 1497-1501
- **ANTL, L et al.** *Colloids and Surfaces,* 1986, vol. 17, 67-78